# EUROPÄISCHE PATENTSCHRIFT

(11) **EP 4 147 932 B1**
(45) Veröffentlichungstag und Bekanntmachung des Hinweises auf die Patenterteilung: **03.06.2026**
(21) Anmeldenummer: 22193064.7
(22) Anmeldetag: 31.08.2022
(51) Int. Cl.: B60T 17/22, F16D 55/226, F16D 65/18, F16D 66/02

(54) **VERFAHREN ZUR BESTIMMUNG EINES AKTUELLEN LÜFTSPIELS EINER BREMSVORRICHTUNG UND BREMSSYSTEM**
METHOD FOR DETERMINING A CURRENT CLEARANCE OF A BRAKING DEVICE AND BRAKING SYSTEM
PROCÉDÉ DE DÉTERMINATION D'UN JEU ACTUEL D'UN DISPOSITIF DE FREINAGE ET SYSTÈME DE FREINAGE

(30) Priorität: 14.09.2021 DE 102021210169
(43) Veröffentlichungstag der Anmeldung: 15.03.2023
(73) Patentinhaber: VOLKSWAGEN AG, 38440 Wolfsburg (DE)
(72) Erfinder: Bärecke, Frank, 38444 Wolfsburg (DE); Stebner, Frank, 38108 Braunschweig (DE); Dabrowski, Krzysztof, 38471 Rühen (DE)

(56) Entgegenhaltungen:
- EP-A1- 3 626 995
- EP-B1- 2 831 465
- EP-B1- 3 385 137
- DE-A1- 102013 112 527
- DE-A1- 102017 131 252

## Beschreibung

Die vorliegende Erfindung betrifft ein Verfahren sowie ein Bremssystem zur Bestimmung eines Lüftspiels einer Bremsvorrichtung eines Kraftfahrzeugs. Darüber hinaus betrifft die Erfindung ein Kraftfahrzeug, umfassend ein erfindungsgemäßes Bremssystem.

Unter einem Lüftspiel wird in der Fahrzeugtechnik insbesondere der Abstand, den der Bremsbelag und die Bremsscheibe einer Bremsvorrichtung im unbetätigten Zustand zueinander haben, verstanden. Über die Lebensdauer einer Bremsvorrichtung kann das Lüftspiel dabei in gewissen Bereichen variieren. So nimmt das Lüftspiel über die Betriebszeit einer Bremsvorrichtung aufgrund des Verschleißes der Komponenten in der Regel kontinuierlich zu, was allerdings in der Regel durch mechanische Lösungen ausgeglichen wird, um das Lüftspiel konstant zu halten. Andererseits führen Verschmutzungen und Ablagerungen auf den Bremskomponenten zu einer Verringerung des Lüftspiels. Sowohl ein zu großes, als auch ein zu kleines Lüftspiel kann bei einem Überschreiten eines Toleranzbereiches von Nachteil sein.

Ist das Lüftspiel zu groß, verlängern sich die Pedalwege, was zu einem verzögerten Aufbau der Bremskraft und schließlich zu längeren Bremswegen führt. Bei einem zu geringen Lüftspiel besteht dagegen die Gefahr, dass sich die beiden Reibpartner auch bei nicht getretenem Bremspedal berühren, was zu unerwünschten Restbremsmomenten führt. Hierdurch wird nicht nur der Kraftstoffverbrauch erhöht, sondern auch ein erhöhter Verschleiß der Bremskomponenten verursacht. Zudem entstehen durch die Restbremsmomente hohe Temperaturen, die nicht nur die Bremskraft selbst negativ beeinflussen, sondern durch punktuelle Überhitzung auch zu einer dauerhaften Schädigung der Bremskomponenten führen können.

Aus sicherheitstechnischen Gründen wäre es sinnvoll, das aktuelle Lüftspiel von Bremsvorrichtungen eines Kraftfahrzeugs zumindest in bestimmten Abständen zu ermitteln. Verfahren und Systeme zur Bestimmung eines Lüftspiels von Bremsvorrichtungen eines Kraftfahrzeugs sind bspw. aus der DE 10 2017 131 252 A1 oder der WO 2014/041160 A1 bekannt.

Nachteiligerweise sind die bekannten Systeme und Verfahren entweder nicht dazu ausgebildet, ein aktuelles Lüftspiel einer Bremsvorrichtung exakt genug zu erfassen, sodass keine genügend zuverlässige Prognose hinsichtlich der Notwendigkeit eines Austausches von Bremskomponenten möglich ist oder aber die Systeme und Verfahren sind derart komplex und aufwändig ausgestaltet, dass hohe Kosten für Herstellung und Wartung der Systeme anfallen.

Es ist daher die Aufgabe der vorliegenden Erfindung, die voranstehend beschriebenen Nachteile zumindest teilweise zu beheben, insbesondere ist es die Aufgabe der vorliegenden Erfindung, ein Verfahren zur Bestimmung eines Lüftspiels einer Bremsvorrichtung eines Kraftfahrzeugs zur Verfügung zu stellen, das eine möglichst exakte und zuverlässige Prognose hinsichtlich der Notwendigkeit einer Wartung oder Reparatur einer Bremsvorrichtung ermöglicht und gleichzeitig selbst möglichst kostengünstig herstellbar und wartbar ist.

Die voranstehende Aufgabe wird gelöst durch ein Verfahren mit den Merkmalen des Anspruchs 1, ein Bremssystem gemäß Anspruch 10 sowie ein Kraftfahrzeug gemäß Anspruch 11. Weitere Merkmale und Details der Erfindung ergeben sich aus den Unteransprüchen, der Beschreibung und den Zeichnungen. Die technischen Merkmale, die zu dem erfindungsgemäßen Verfahren offenbart werden, gelten dabei auch in Verbindung mit dem erfindungsgemäßen Bremssystem bzw. dem erfindungsgemäßen Kraftfahrzeug und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Das erfindungsgemäße Verfahren zum Betreiben eines Bremssystems eines Kraftfahrzeugs kann hierbei vorzugsweise in einem PKW oder einem Lastkraftwagen, aber auch in einem Motorrad, einem Roller, einem Bagger, einem Gabelstapler oder dergleichen eingesetzt werden. Insbesondere kann das erfindungsgemäße Verfahren hierbei in Kraftfahrzeugen mit einem hydraulischen Bremssystem eingesetzt werden. Allerdings ist auch ein Einsatz des erfindungsgemäßen Verfahrens in Kraftfahrzeugen mit elektronischem Bremssystem bzw. elektronischer Unterstützung denkbar.

Das erfindungsgemäße Verfahren zum Betreiben eines Bremssystems eines Kraftfahrzeugs umfasst hierbei die Schritte eines Erfassens von Parametern zur Bestimmung des Startpunktes und des Endpunktes eines Aufbauvorgangs eines Bremsvorgangs mittels einer Sensoreinheit, eines Bestimmens des Startpunktes und des Endpunktes des Aufbauvorgangs auf Basis der erfassten Parameter mittels einer Verarbeitungseinheit sowie eines Bestimmens des aktuellen Lüftspiels der Bremsvorrichtung auf Basis des bestimmten Startpunktes und Endpunktes des Aufbauvorgangs mittels der Verarbeitungseinheit.

Bei der Ausführung des erfindungsgemäßen Verfahrens kann hierbei insbesondere über die Bestimmung eines Startpunktes und eines Endpunktes eines Aufbauvorgangs eines Bremsvorgangs das aktuelle Lüftspiel der Bremsvorrichtung ermittelt werden. Im Rahmen der Erfindung ist dabei erkannt worden, dass über die Bestimmung des Startpunktes und des Endpunktes eines Aufbauvorgangs eines Bremsvorgangs eine besonders exakte Ermittlung des aktuellen Lüftspiels möglich ist, mittels der eine besonders zuverlässige Prognose hinsichtlich der Notwendigkeit eines Austausches von Bremskomponenten garantiert wird. Darüber hinaus ist das erfindungsgemäße Verfahren mit einfachen Mitteln auf unkomplizierte Weise ausführbar, sodass keine hohen Kosten für Herstellung und Wartung anfallen.

Unter einem Aufbauvorgang eines Bremsvorgangs kann erfindungsgemäß die Phase eines Bremsvorgangs verstanden werden, die zwischen einem Ruhezustand und einer vollständigen Betätigung der Bremsvorrichtung liegt, also die Phase zwischen einem Startpunkt und einem Endpunkt, in der ein Bremsdruck aufgebaut wird. Unter Parametern zur Bestimmung des Startpunktes und des Endpunktes eines Aufbauvorgangs eines Bremsvorgangs können ferner vorzugsweise über Sensoren erfassbare Messwerte verstanden werden.

Beim Anlegen einer Bremse einer Bremsvorrichtung kann in der Regel im Wesentlichen zwischen drei Zuständen bzw. Phasen unterschieden werden. In dem ersten Zustand bzw. der ersten Phase liegt vorzugsweise kein Bremsdruck an und die Bremse befindet sich in einem geöffneten Zustand. In diesem ersten Zustand bzw. der ersten Phase ist demnach vorzugsweise keine Berührung bzw. nur eine unregelmäßige und sehr seltene Berührung (bspw. weniger als eine Berührung pro Sekunde) hörbar bzw. akustisch wahrnehmbar. Im zweiten Zustand bzw. der zweiten Phase, dem Aufbauvorgang, wird vorzugsweise der Bremsdruck aufgebaut und das Lüftspiel schließlich überwunden (Endpunkt des zweiten Zustands bzw. der zweiten Phase). In dem Zeitpunkt, in dem das Lüftspiel überwunden wird, beträgt der Bremsdruck in der Regel weniger als 5 bar. Der Bremsdruckaufbau erfolgt hierbei vorzugsweise über eine Befüllung der Radbremse mit einer Hydraulik- bzw. Bremsflüssigkeit. Unter einem Startpunkt des Aufbauvorgangs kann gegenständlich vorteilhafterweise ein erster Zeitpunkt verstanden werden, bei dem eine regelmäßige Berührung von Bremsscheibe und Bremsbelag bei Druckerhöhung wahrnehmbar bzw. hörbar ist bzw. der letzte Zeitpunkt, bei dem die regelmäßige Berührung bei einer Druckreduzierung noch wahrnehmbar bzw. hörbar ist. Unter einem Endpunkt des Aufbauvorgangs kann gegenständlich vorteilhafterweise ein letzter Zeitpunkt verstanden werden, bei dem eine regelmäßige Berührung von Bremsscheibe und Bremsbelag bei Druckerhöhung wahrnehmbar bzw. hörbar ist, bzw. der erste Zeitpunkt, bei dem die regelmäßige Berührung bei einer Druckreduzierung wahrnehmbar bzw. hörbar ist. In dem dritten Zustand bzw. der dritten Phase, der bzw. die vorteilhafterweise beginnt, wenn das Lüftspiel vollständig überwunden wird, kommt es insbesondere zu einem kontinuierlichen Kontakt zwischen Bremsbelag und Bremsscheibe.. In dem dritten Zustand kann dabei der Bremsdruck nach Überwindung des Lüftspiels bis zur Blockiergrenze auf maximal etwa 200 bar erhöht werden, wobei es vorteilhafterweise ab etwa 100 bar zum Blockieren der Räder kommen kann. In die Radbremse kann dabei weiterhin Volumen gefördert werden, um elastische Verformungen der Bremsanlage infolge der hohen Kräfte und die Kompressibilität der Bremsflüssigkeit auszugleichen.

Die verschiedenen Zustände bzw. Phasen können erfindungsgemäß vorteilhafterweise akustisch erkannt und zugeordnet werden. So können in dem zweiten Zustand, bzw. der zweiten Phase, dem Aufbauvorgang, bspw. erste sporadische Anschlaggeräusche von Bremsscheibe und Bremsbelag detektierbar sein, die den hörbaren Erstkontakt zwischen den Bremsbelägen und der Bremsscheibe beim Befüllen der Bremsvorrichtung mit Hydraulik- bzw. Bremsflüssigkeit wiedergeben. Im Verlaufe der Befüllung und des voranschreitenden Bremsdruckaufbaus kann dann eine Intensivierung der Anschlaggeräusche wahrgenommen werden, bis schließlich keine Anschlaggeräusche mehr wahrgenommen werden können, wenn die Bremsscheibe in der dritten Phase permanent an den Bremsbelägen anliegt. Ursache für die wahrnehmbaren Anschlaggeräusche in der zweiten Phase ist hierbei insbesondere eine Taumelbewegung der Bremsscheibe, die den Reibbelag zu beiden Seiten wegstellen und bei unbetätigter Bremsvorrichtung eine Kontaktfreiheit sicherstellen soll. Sofern die wahrgenommenen Geräusche der Befüllung der Bremsvorrichtung mit einer Hydraulik- bzw. Bremsflüssigkeit zugeordnet werden können, kann daraus vorteilhafterweise ermittelt werden, wie groß das Lüftspiel zu diesem Zeitpunkt war. In der dritten Phase sind dann zwar insbesondere keine Anschlaggeräusche mehr wahrnehmbar, allerdings kann es in der dritten Phase zu wahrnehmbaren Schleifgeräuschen bzw. zu einem Bremsenquietschen kommen. Durch das feste Anlegen der Bremsbeläge an die Bremsscheibe in der dritten Phase kann es dabei zu einer Veränderung der Eigenfrequenz des Gesamtsystems kommen. Ein Übergang in die dritte Phase kann demnach bspw. über eine Frequenzverschiebung von wahrnehmbaren akustischen Signalen erkannt werden.

Im Hinblick auf eine möglichst exakte und gleichzeitig einfache und kostengünstige Ausführung einer Bestimmung eines Lüftspiels einer Bremsvorrichtung eines Kraftfahrzeugs kann erfindungsgemäß vorteilhafterweise vorgesehen sein, dass das Erfassen von Parametern zur Bestimmung des Startpunktes und des Endpunktes eines Aufbauvorgangs eines Bremsvorgangs mittels Akustiksensoren, vorzugsweise mittels Nässesensoren oder Ultraschallsensoren erfolgt, wobei die Nässesensoren insbesondere als Piezosensoren ausgebildet sind und/oder die Ultraschallsensoren in einer Doppelfunktion als Parkabstandssensoren des Kraftfahrzeugs verwendet werden bzw. ausgebildet sind. Die Ultraschallsensoren können dabei - insbesondere in der Doppelfunktion als Parkabstandssensoren - an der Außenseite der Karosserie des Fahrzeugs angeordnet sein. Die vorzugsweise als Piezosensoren ausgebildeten Nässesensoren können insbesondere in einem Radkasten des Fahrzeugs angeordnet sein und dazu geeignet sein, Akustiksignale im Radkasten einzufangen. Die Nässesensoren können vorzugsweise etwa auf Höhe der Radmitte oder etwas darunter, hinter dem Rad, in der Radmittenebene angeordnet sein, insbesondere dort, wo Spritzwasser, welches vom Profil eines Reifens auf einer nassen Fahrbahn aufgenommen wird, durch die Fliehkraft vorrangig hingeschleudert wird. Ebenso können alternativ oder kumulativ auch andere Sensoren, wie Mikrophone, Temperatursensoren oder Sensoren aus Geräuschunterdrückungssystemen vorgesehen sein, mittels denen Parameter zur Bestimmung des Startpunktes und des Endpunktes eines Aufbauvorgangs eines Bremsvorgangs erfasst werden können. Über die Verwendung von Temperatursensoren können bspw. in Verbindung mit einem Erwärmungsmodell die Restbremsmomente indirekt grob über die Offset-Temperatur oberhalb der Umgebungstemperatur bestimmt werden. Die Offset-Temperatur ist hierbei bei konstanter Fahrgeschwindigkeit ohne Bremsbetätigung proportional zum Restbremsmoment.

Im Rahmen einer einfachen und zuverlässigen Detektion eines Startpunktes und eines Endpunktes eines Aufbauvorgangs einer Bremsvorrichtung kann gegenständlich vorteilhafterweise vorgesehen sein, dass das Bestimmen des Startpunktes des Aufbauvorgangs des Bremsvorgangs über das Detektieren eines Startpunktes einer Berührung zwischen einem Bremsbelag und einer Bremsscheibe erfolgt und das Bestimmen des Endpunktes des Aufbauvorgangs des Bremsvorgangs über das Detektieren einer permanenten Berührung zwischen dem Bremsbelag und der Bremsscheibe erfolgt. Ein permanentes Berühren kann bspw. über eine permanente Berührungsdauer von mehr als 0,3 Sekunden definiert sein.

Im Rahmen einer besonders exakten und aussagekräftigen Bestimmung eines aktuellen Lüftspiels einer Bremsvorrichtung kann erfindungsgemäß vorteilhafterweise vorgesehen sein, dass neben einem Startpunkt und einem Endpunkt des Aufbauvorgangs des Bremsvorgangs ein Ruhezustand der Bremsvorrichtung bestimmt wird, in dem die Bremsvorrichtung nicht betätigt wird, wobei der Startpunkt vorzugsweise durch den Übergang des Ruhezustands in den Aufbauvorgang definiert ist. Durch die Bestimmung des Ruhezustands, bzw. der Ruhephase, ist es insbesondere aufgrund der Vergleichsmöglichkeit möglich, den Startpunkt für den Aufbauvorgang exakter zu bestimmen. Der Ruhezustand, bzw. die Ruhephase, kann hierbei vorzugsweise mittels Akustiksensoren, bspw. über eine Detektion normaler Fahrgeräusche wahrgenommen werden. Hierbei kann dann idealerweise ein ebener Untergrund und/oder eine leise Fahrumgebung geschaffen werden, um sporadische Kontakte zwischen Bremsbelägen und Bremsscheibe aufgrund einer unebenen Fahrbahn auszuschließen. Kommt es in dem ersten Zustand ohne Fahrbahnanregungen und Bremsbetätigung vermehrt zu Kontaktgeräuschen der Radbremse, kann andererseits bereits auf ein niedriges Lüftspiel und ein erhöhtes Bremsmoment geschlossen werden.

Ebenso kann erfindungsgemäß vorteilhafterweise vorgesehen sein, dass neben einem Startpunkt und einem Endpunkt des Aufbauvorgangs des Bremsvorgangs ein Bremszustand der Bremsvorrichtung bestimmt wird, in dem die Bremsvorrichtung vollständig betätigt wird, wobei der Endpunkt des Aufbauvorgangs vorzugsweise durch den Übergang des Aufbauvorgangs in den Bremszustand definiert ist. Durch die Bestimmung des Zustands, bzw. der Phase einer vollständigen Betätigung ist es insbesondere aufgrund der Vergleichsmöglichkeit möglich, den Endpunkt für den Aufbauvorgang exakter zu bestimmen.

Im Rahmen einer einfachen Art und Weise einer besonders exakten Bestimmung eines aktuellen Lüftspiels einer Bremsvorrichtung kann erfindungsgemäß vorteilhafterweise vorgesehen sein, dass das Bestimmen des Lüftspiels der Bremsvorrichtung auf Basis der Zeitdifferenz zwischen dem Startpunkt und dem Endpunkt des Aufbauvorgangs bestimmt wird, wobei das Bestimmen des Lüftspiels vorzugsweise über den Vergleich einer ermittelten Zeitdifferenz mit Referenzwerten erfolgt. Es versteht sich, dass hierbei vorteilhafterweise nicht nur der Zeitpunkt des Bremsdruckaufbaus bzw. des Befüllens mit einer Bremsflüssigkeit definiert sein sollte, sondern entsprechend vorzugsweise auch die Befüllgeschwindigkeit bzw. das befüllte Volumen oder die Verschiebung des Bremsbelages berücksichtigt werden sollte, da diese Größen unmittelbar miteinander in Beziehung stehen.

Um die Kenntnis des aktuellen Lüftspiels für die Überwachung der Restbremsmomente bzw. die Ansteuerung der Bremse zu nutzen, kann gegenständlich ferner vorgesehen sein, dass auf Basis des bestimmten Lüftspiels der Bremsvorrichtung ein Einleiten von Gegenmaßnahmen vorgesehen ist, wobei die Gegenmaßnahmen vorzugsweise einen Reparatur- und/oder Wartungsvorgang umfassen. Bei einer Reparatur oder einer Wartung kann bei einem Werkstattaufenthalt dann bspw. die Kontrolle der Radbremse empfohlen werden. Ein technisch versierter Kunde kann erhöhte Restbremsmomente an einem Rad, insbesondere zusätzlich, auch durch einen Temperaturvergleich zwischen den Fahrzeugseiten erkennen. Hierzu könnte bspw. mit konstanter Geschwindigkeit und ohne Bremsbetätigung eine längere Strecke gefahren werden, um aktive Bremsmomente möglichst zu vermeiden.

Im Rahmen der Erhöhung der Fahrsicherheit kann zu dem Zweck eines vorausschauenden Fahrens vorteilhafterweise ferner vorgesehen sein, dass auf Basis des bestimmten Lüftspiels der Bremsvorrichtung eine Warnmeldung an den Fahrer des Kraftfahrzeugs ausgesendet wird, wobei die Warnmeldung vorzugsweise ausgesendet wird, wenn ein Schwellenwert eines Parameters zur Bestimmung des Lüftspiels über- oder unterschritten wird.

Um eine besonders exakte und aussagekräftige Ermittlung eines Lüftspiels einer Bremsvorrichtung zu gewährleisten, ist erfindungsgemäß vorgesehen, dass vor und/oder beim Erfassen von Parametern zur Bestimmung des Startpunktes und des Endpunktes eines Aufbauvorgangs eines Bremsvorgangs Maßnahmen eingeführt werden, um die Genauigkeit der Bestimmung zu erhöhen, wobei die Maßnahmen vorzugsweise einen der folgenden Schritte umfassen:
- Säubern der Oberfläche einer Bremsscheibe und/oder eines Bremsbelags,
- Gezieltes langsames Aufbauen eines Bremsdruckes, insbesondere unter Abstandskontrolle,
- Gezieltes langsames Abbauen eines Bremsdruckes, insbesondere unter Abstandskontrolle.

Vorteilhafterweise kann die Ansteuerung der Radbremse in ausgewählten Situationen hierbei so gewählt werden, dass die zweite Phase unter besonders günstigen Bedingungen durchfahren wird. Hierbei kann bspw. ein Bremsscheibenwischer oder dergleichen vorgesehen sein, mittels dem eine Wasserschicht auf einer Bremsscheibe und/oder einem Bremsbelag abgetragen werden kann. Für ein Abtragen einer Wasserschicht könnte bspw. kurzzeitig ein moderater Bremsdruck aufgebaut werden, sodass die Bremsscheibe angelegt wird und ein Wasserfilm abgetragen werden kann. Alternativ oder kumulativ kann ein Bremsdruckaufbau bei der Ausführung des gegenständlichen Verfahrens sehr langsam erfolgen, sodass eine einfache und zuverlässige Bestimmung des Startpunktes und des Endpunktes des Aufbauvorgangs auf Basis der erfassten Parameter möglich ist. Ferner kann während der Fahrt eine Abstandskontrolle durchgeführt werden. Um die zweite Phase sehr langsam zu durchfahren, kann kurz bevor eine notwendige Verzögerung über die Radbremse erfolgt, auch bereits sehr langsam ein Bremsdruck aufgebaut werden. Es versteht sich, dass gegenständlich sowohl über eine Detektion des Übergangs von der ersten zur dritten Phase (Bremsdruckaufbau) eine Bestimmung des Startpunktes und des Endpunktes des Aufbauvorgangs erfolgen kann, als auch über einen Übergang von der dritten bis in die erste Phase zurück (Bremsdruckabbau). Im Hinblick auf ein gezielt langsames Auf- und Abbauen des Bremsdruckes könnte bei einem normalen Bremsen ferner vorteilhafterweise ein langsames Auf- und Abbauen des Bremsdruckes an einzelnen Rädern oder Achsen vorgesehen sein, was nahezu bei jeder Komfortbremsung anwendbar und insbesondere bei einem elektromechanischen Bremssystem leicht realisierbar ist.

Es versteht sich vorliegend zudem, dass einzelne, mehrere oder alle obligatorischen und/oder optionalen Schritte des erfindungsgemäßen Verfahrens in der vorgeschlagenen Reihenfolge, aber auch abweichend von der vorgeschlagenen Reihenfolge ausgeführt werden können. Hierbei können einzelne, mehrere oder alle obligatorischen und/oder optionalen Schritte des erfindungsgemäßen Verfahrens insbesondere wiederholt, bspw. zyklisch wiederholt ausgeführt werden. Es versteht sich ferner, dass einzelne, mehrere oder alle der obligatorischen und optionalen Schritte des erfindungsgemäßen Verfahrens gegenständlich auch durch einen Computer implementiert werden können.

Ebenfalls Gegenstand der Erfindung ist ferner ein Bremssystem, eingerichtet zur Ausführung eines voranstehend beschriebenen Verfahrens. Hierbei umfasst das gegenständliche Bremssystem eine Bremsvorrichtung mit einer Bremsscheibe, einem Bremssattel und einem an dem Bremssattel, zumindest teilweise zwischen dem Bremssattel und der Bremsscheibe angeordneten Bremsbelag, eine Sensoreinheit zur Erfassung von Parametern zur Bestimmung des Startpunktes und des Endpunktes eines Aufbauvorgangs eines Bremsvorgangs, eine Verarbeitungseinheit zur Bestimmung des Startpunktes und des Endpunktes eines Aufbauvorgangs eines Bremsvorgangs und zur Bestimmung des Lüftspiels der Bremsvorrichtung auf Basis des bestimmten Startpunktes und Endpunktes des Aufbauvorgangs. Damit bringt das erfindungsgemäße Bremssystem die gleichen Vorteile mit sich, wie sie bereits ausführlich in Bezug auf das erfindungsgemäße Verfahren beschrieben worden sind.

Ebenfalls Gegenstand der Erfindung ist ferner ein Kraftfahrzeug, umfassend ein voranstehend beschriebenes Bremssystem. Damit weist das erfindungsgemäße Bremssystem die gleichen Vorteile auf, wie sie bereits ausführlich in Bezug auf das erfindungsgemäße Verfahren bzw. das erfindungsgemäße Bremssystem beschrieben worden sind.

Weitere Vorteile Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung der einzelnen Schritte eines erfindungsgemäßen Verfahrens zur Bestimmung eines aktuellen Lüftspiels einer Bremsvorrichtung eines Kraftfahrzeugs,
- Fig. 2: eine schematische Darstellung eines innerhalb eines Kraftfahrzeugs angeordneten erfindungsgemäßen Bremssystems,
- Fig. 3: eine vergrößerte Ansicht einer Bremsvorrichtung eines erfindungsgemäßen Bremssystems.

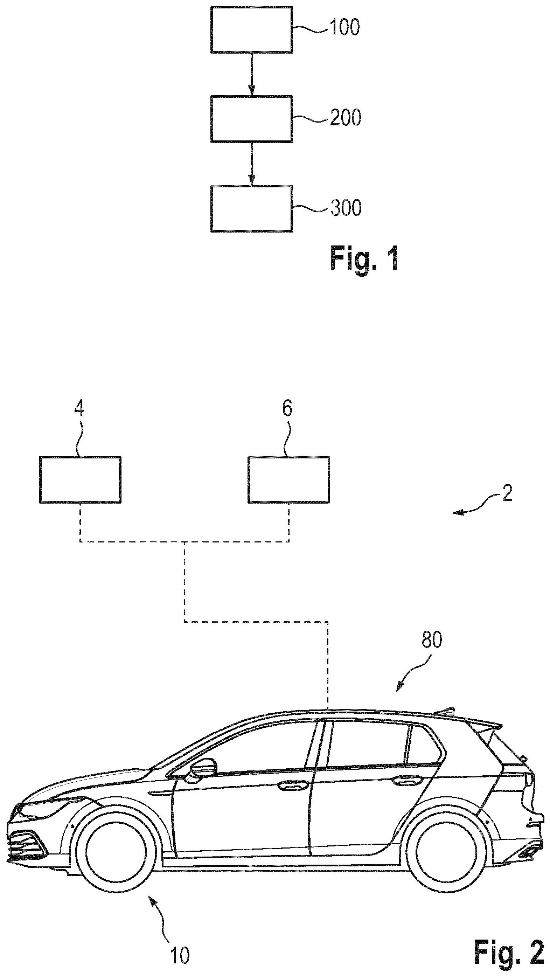

Fig. 1 zeigt eine schematische Darstellung der einzelnen Schritte eines erfindungsgemäßen Verfahrens zur Bestimmung eines aktuellen Lüftspiels einer Bremsvorrichtung 10 eines Kraftfahrzeugs 80.

Hierbei umfasst das erfindungsgemäße Verfahren die Schritte eines Erfassens 100 von Parametern zur Bestimmung des Startpunktes T1 und des Endpunktes T2 eines Aufbauvorgangs eines Bremsvorgangs mittels einer Sensoreinheit 4, eines Bestimmens 200 des Startpunktes T1 und des Endpunktes T2 des Aufbauvorgangs auf Basis der erfassten Parameter mittels einer Verarbeitungseinheit 6 sowie eines Bestimmens 300 des Lüftspiels der Bremsvorrichtung 10 auf Basis des bestimmten Startpunktes T1 und Endpunktes T2 des Aufbauvorgangs mittels der Verarbeitungseinheit 6.

Das Erfassen 100 von Parametern zur Bestimmung des Startpunktes T1 und des Endpunktes T2 eines Aufbauvorgangs eines Bremsvorgangs kann bspw. mittels Akustiksensoren, vorzugsweise mittels Nässesensoren oder Ultraschallsensoren erfolgen, wobei die Nässesensoren insbesondere als Piezosensoren ausgebildet sind und/oder die Ultraschallsensoren in einer Doppelfunktion als Parkabstandssensoren des Kraftfahrzeugs 80 verwendet werden können.

Das Bestimmen 200 des Startpunktes T1 des Aufbauvorgangs des Bremsvorgangs kann ferner über das Detektieren eines Startpunktes einer Berührung zwischen einem Bremsbelag 16 und einer Bremsscheibe 12 erfolgen und das Bestimmen 200 des Endpunktes T2 des Aufbauvorgangs des Bremsvorgangs über das Detektieren einer permanenten Berührung zwischen dem Bremsbelag 16 und der Bremsscheibe 12.

Neben einem Startpunkt T1 und einem Endpunkt T2 des Aufbauvorgangs des Bremsvorgangs kann ferner ein Ruhezustand der Bremsvorrichtung 10 bestimmt werden, in dem die Bremsvorrichtung 10 nicht betätigt wird, wobei der Startpunkt T1 vorzugsweise durch den Übergang des Ruhezustands in den Aufbauvorgang definiert sein kann.

Zudem ist es ferner denkbar, dass neben einem Startpunkt T1 und einem Endpunkt T2 des Aufbauvorgangs des Bremsvorgangs ein Bremszustand der Bremsvorrichtung 10 bestimmt wird, in dem die Bremsvorrichtung 10 vollständig betätigt wird, wobei der Endpunkt T2 des Aufbauvorgangs vorzugsweise durch den Übergang des Aufbauvorgangs in den Bremszustand definiert sein kann.

Das Bestimmen 300 des Lüftspiels der Bremsvorrichtung 10 kann zudem insbesondere auf Basis der Zeitdifferenz ΔT zwischen dem Startpunkt T1 und dem Endpunkt T2 des Aufbauvorgangs bestimmt werden.

Zudem ist es ferner vorstellbar, dass auf Basis des bestimmten Lüftspiels der Bremsvorrichtung 10 ein Einleiten von Gegenmaßnahmen, wie eines Reparatur- und/oder Wartungsvorgangs erfolgt.

Auch kann auf Basis des bestimmten Lüftspiels der Bremsvorrichtung 10 eine Warnmeldung an den Fahrer des Kraftfahrzeugs 80 ausgesendet werden.

Schließlich ist es ebenso vorstellbar, dass vor und/oder beim Erfassen 100 von Parametern zur Bestimmung des Startpunktes T1 und des Endpunktes T2 eines Aufbauvorgangs eines Bremsvorgangs Maßnahmen eingeführt werden, um die Genauigkeit der Bestimmung zu erhöhen.

Fig. 2 zeigt eine schematische Darstellung eines innerhalb eines Kraftfahrzeugs 80 angeordneten erfindungsgemäßen Bremssystems 2.

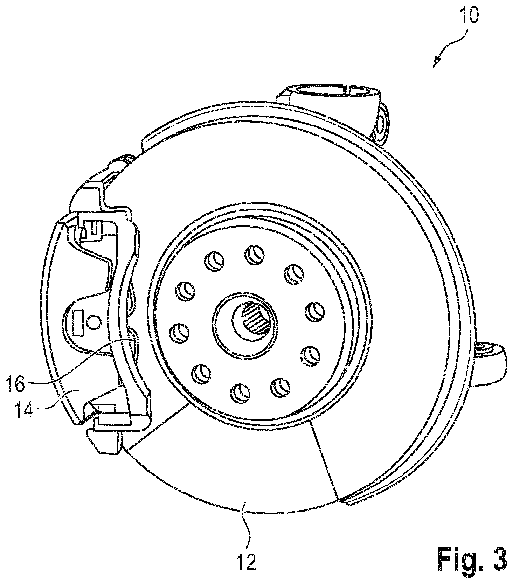

Wie in Fig. 2 zu erkennen ist, umfasst das erfindungsgemäße Bremssystem 2 eine in Fig. 3 noch näher beschriebene Bremsvorrichtung 10, eine Sensoreinheit 4 zur Erfassung 100 von Parametern zur Bestimmung des Startpunktes T1 und des Endpunktes T2 eines Aufbauvorgangs eines Bremsvorgangs sowie eine Verarbeitungseinheit 6 zur Bestimmung 200 des Startpunktes T1 und des Endpunktes T2 eines Aufbauvorgangs eines Bremsvorgangs und zur Bestimmung 300 des Lüftspiels der Bremsvorrichtung 10 auf Basis des bestimmten Startpunktes T1 und Endpunktes T2 des Aufbauvorgangs.

Fig. 3 zeigt eine vergrößerte Ansicht der Bremsvorrichtung 10 des erfindungsgemäßen Bremssystems 2, mit einer Bremsscheibe 12, einem Bremssattel 14 und einem an dem Bremssattel 14, zumindest teilweise zwischen dem Bremssattel 14 und der Bremsscheibe 12 angeordneten Bremsbelag 16.

Mittels des erfindungsgemäßen Verfahrens sowie des erfindungsgemäßen Bremssystem 2 ist es insbesondere möglich, über die Bestimmung eines Startpunktes und eines Endpunktes eines Aufbauvorgangs eines Bremsvorgangs ein aktuelles Lüftspiel einer Bremsvorrichtung auf besonders exakte Weise zu bestimmen und dadurch eine besonders zuverlässige Prognose hinsichtlich der Notwendigkeit eines Austausches von Bremskomponenten zu garantieren. Darüber hinaus ist das erfindungsgemäße Verfahren mit einfachen Mitteln auf unkomplizierte Weise ausführbar, sodass keine hohen Kosten für Herstellung und Wartung anfallen.

### Bezugszeichenliste

- 2: Bremssystem
- 4: Sensoreinheit
- 4': Sensoren
- 6: Verarbeitungseinheit
- 10: Bremsvorrichtung
- 12: Bremsscheibe
- 14: Bremssattel
- 16: Bremsbelag
- 80: Kraftfahrzeug

- 100: Erfassen von Parametern zur Bestimmung des Startpunktes und des Endpunktes eines Aufbauvorgangs eines Bremsvorgangs
- 200: Bestimmen des Startpunktes und des Endpunktes des Aufbauvorgangs des Bremsvorgangs
- 300: Bestimmen des Lüftspiels der Bremsvorrichtung auf Basis des bestimmten Startpunktes und Endpunktes des Aufbauvorgangs des Bremsvorgangs

- T1: Startpunkt des Aufbauvorgangs des Bremsvorgangs
- T2: Endpunkt des Aufbauvorgangs des Bremsvorgangs
- ΔT: Zeitdifferenz

## Patentansprüche

1. Verfahren zur Bestimmung eines aktuellen Lüftspiels einer Bremsvorrichtung (10) eines Kraftfahrzeugs (80), umfassend die Schritte:
- Erfassen (100) von Parametern zur Bestimmung eines Startpunktes (T1) und eines Endpunktes (T2) eines Aufbauvorgangs eines Bremsvorgangs mittels einer Sensoreinheit (4), wobei der Aufbauvorgang eines Bremsvorgangs die Phase eines Bremsvorgangs zwischen einem Ruhezustand der Bremsvorrichtung (10), in dem die Bremsvorrichtung (10) nicht betätigt wird, und einem Bremszustand der Bremsvorrichtung (10), in dem die Bremsvorrichtung (10) vollständig betätigt wird, ist,
- Bestimmen (200) des Startpunktes (T1) und des Endpunktes (T2) des Aufbauvorgangs auf Basis der erfassten Parameter mittels einer Verarbeitungseinheit (6),
- Bestimmen (300) des Lüftspiels der Bremsvorrichtung (10) auf Basis des bestimmten Startpunktes (T1) und Endpunktes (T2) des Aufbauvorgangs mittels der Verarbeitungseinheit (6), **dadurch gekennzeichnet,**
**dass** vor und/oder beim Erfassen (100) von Parametern zur Bestimmung des Startpunktes (T1) und des Endpunktes (T2) des Aufbauvorgangs eines Bremsvorgangs Maßnahmen eingeführt werden, um die Genauigkeit der Bestimmung zu erhöhen, wobei die Maßnahmen einen der folgenden Schritte umfassen:
- Säubern der Oberfläche einer Bremsscheibe (12) und/oder eines Bremsbelags (16),
- Gezieltes langsames Aufbauen eines Bremsdruckes, insbesondere unter Abstandskontrolle,
- Gezieltes langsames Abbauen eines Bremsdruckes, insbesondere unter Abstandskontrolle.

2. Verfahren nach Anspruch 1,
**dadurch gekennzeichnet,**
**dass** das Erfassen (100) von Parametern zur Bestimmung des Startpunktes (T1) und des Endpunktes (T2) des Aufbauvorgangs eines Bremsvorgangs mittels Akustiksensoren, vorzugsweise mittels Nässesensoren oder Ultraschallsensoren erfolgt, wobei die Nässesensoren insbesondere als Piezosensoren ausgebildet sind und/oder die Ultraschallsensoren in einer Doppelfunktion als Parkabstandssensoren des Kraftfahrzeugs (80) verwendet werden.

3. Verfahren nach Anspruch 1 oder 2,
**dadurch gekennzeichnet,**
**dass** das Bestimmen (200) des Startpunktes (T1) des Aufbauvorgangs des Bremsvorgangs über das Detektieren eines Startpunktes einer Berührung zwischen einem Bremsbelag (16) und einer Bremsscheibe (12) erfolgt und das Bestimmen (200) des Endpunktes (T2) des Aufbauvorgangs des Bremsvorgangs über das Detektieren einer permanenten Berührung zwischen dem Bremsbelag (16) und der Bremsscheibe (12) erfolgt, wobei eine permanente Berührung durch Überschreiten einer permanenten Berührungsdauer von vorzugsweise 0,3 Sekunden festgestellt wird.

4. Verfahren nach einem der vorangehenden Ansprüche,
**dadurch gekennzeichnet,**
**dass** neben dem Startpunkt (T1) und dem Endpunkt (T2) des Aufbauvorgangs des Bremsvorgangs der Ruhezustand der Bremsvorrichtung (10) bestimmt wird, in dem die Bremsvorrichtung (10) nicht betätigt wird, wobei der Startpunkt (T1) vorzugsweise durch den Übergang des Ruhezustands in den Aufbauvorgang definiert ist.

5. Verfahren nach einem der vorangehenden Ansprüche,
**dadurch gekennzeichnet,**
**dass** neben dem Startpunkt (T1) und dem Endpunkt (T2) des Aufbauvorgangs des Bremsvorgangs der Bremszustand der Bremsvorrichtung (10) bestimmt wird, in dem die Bremsvorrichtung (10) vollständig betätigt wird, wobei der Endpunkt (T2) des Aufbauvorgangs vorzugsweise durch den Übergang des Aufbauvorgangs in den Bremszustand definiert ist.

6. Verfahren nach einem der vorangehenden Ansprüche,
**dadurch gekennzeichnet,**
**dass** das Bestimmen (300) des Lüftspiels der Bremsvorrichtung (10) auf Basis der Zeitdifferenz (ΔT) zwischen dem Startpunkt (T1) und dem Endpunkt (T2) des Aufbauvorgangs bestimmt wird, wobei das Bestimmen (300) des Lüftspiels vorzugsweise über den Vergleich einer ermittelten Zeitdifferenz (ΔT) mit Referenzwerten erfolgt.

7. Verfahren nach einem der vorangehenden Ansprüche,
**dadurch gekennzeichnet,**
**dass** auf Basis des bestimmten Lüftspiels der Bremsvorrichtung (10) ein Einleiten von Gegenmaßnahmen vorgesehen ist, wobei die Gegenmaßnahmen vorzugsweise einen Reparatur- und/oder Wartungsvorgang umfassen.

8. Verfahren nach einem der vorangehenden Ansprüche,
**dadurch gekennzeichnet,**
**dass** auf Basis des bestimmten Lüftspiels der Bremsvorrichtung (10) eine Warnmeldung an den Fahrer des Kraftfahrzeugs (80) ausgesendet wird, wobei die Warnmeldung vorzugsweise ausgesendet wird, wenn ein Schwellenwert eines Parameters zur Bestimmung des Lüftspiels über- oder unterschritten wird.

9. Bremssystem (2) zur Anordnung innerhalb eines Kraftfahrzeugs (80), eingerichtet zur Durchführung eines Verfahrens nach einem der vorangehenden Ansprüche, umfassend:
- eine Bremsvorrichtung (10), mit einer Bremsscheibe (12), einem Bremssattel (14) und einem an dem Bremssattel (14), zumindest teilweise zwischen dem Bremssattel (14) und der Bremsscheibe (12) angeordneten Bremsbelag (16),
- eine Sensoreinheit (4) zur Erfassung (100) von Parametern zur Bestimmung des Startpunktes (T1) und des Endpunktes (T2) des Aufbauvorgangs eines Bremsvorgangs, wobei der Aufbauvorgang eines Bremsvorgangs die Phase eines Bremsvorgangs zwischen einem Ruhezustand der Bremsvorrichtung (10), in dem die Bremsvorrichtung (10) nicht betätigt wird, und einem Bremszustand der Bremsvorrichtung (10), in dem die Bremsvorrichtung (10) vollständig betätigt wird, ist,
- eine Verarbeitungseinheit (6) zur Bestimmung (200) des Startpunktes (T1) und des Endpunktes (T2) des Aufbauvorgangs eines Bremsvorgangs und zur Bestimmung (300) des Lüftspiels der Bremsvorrichtung (10) auf Basis des bestimmten Startpunktes (T1) und Endpunktes (T2) des Aufbauvorgangs,
wobei das Bremssystem (2) dazu ausgebildet ist, vor und/oder beim Erfassen (100) von Parametern zur Bestimmung des Startpunktes (T1) und des Endpunktes (T2) des Aufbauvorgangs eines Bremsvorgangs Maßnahmen einzuführen, um die Genauigkeit der Bestimmung zu erhöhen, wobei die Maßnahmen einen der folgenden Schritte umfassen:
- Säubern der Oberfläche der Bremsscheibe (12) und/oder des Bremsbelags (16),
- Gezieltes langsames Aufbauen eines Bremsdruckes, insbesondere unter Abstandskontrolle,
- Gezieltes langsames Abbauen eines Bremsdruckes, insbesondere unter Abstandskontrolle.

10. Kraftfahrzeug (80), umfassend ein Bremssystem (2) nach Anspruch 9.

## Claims

1. Method for determining an actual air clearance of a braking device (10) of a motor vehicle (80), comprising the steps of:
- recording (100) parameters for determining a start point (T1) and an end point (T2) of a build-up process of a braking process by means of a sensor unit (4), the build-up process of a braking process being the phase of a braking process between a rest state of the braking device (10), in which the braking device (10) is not actuated, and a braking state of the braking device (10), in which the braking device (10) is fully actuated,
- determining (200) the start point (T1) and the end point (T2) of the build-up process on the basis of the recorded parameters by means of a processing unit (6),
- determining (300) the air clearance of the braking device (10) on the basis of the determined start point (T1) and end point (T2) of the build-up process by means of the processing unit (6), **characterized in**
**that** before and/or during the recording (100) of parameters for determining the start point (T1) and the end point (T2) of the build-up process of a braking process, measures are introduced to increase the accuracy of the determination, the measures comprising one of the following steps:
- cleaning the surface of a brake disk (12) and/or of a brake pad (16),
- building up a brake pressure in a targeted, slow manner, especially under distance control,
- reducing a brake pressure in a targeted, slow manner, especially under distance control.

2. Method according to claim 1,
**characterized in that**
recording (100) parameters for determining the start point (T1) and the end point (T2) of the build-up process of a braking process is carried out by means of acoustic sensors, preferably by means of wetness sensors or ultrasonic sensors, the wetness sensors being in particular designed as piezo sensors and/or the ultrasonic sensors being used in a dual function as parking distance sensors of the motor vehicle (80).

3. Method according to claim 1 or 2,
**characterized in that**
determining (200) the start point (T1) of the build-up process of the braking process is carried out by detecting a start point of contact between a brake pad (16) and a brake disk (12) and determining (200) the end point (T2) of the build-up process of the braking process is carried out by detecting permanent contact between the brake pad (16) and the brake disk (12), permanent contact being ascertained by the exceeding of a permanent contact duration of preferably 0.3 seconds.

4. Method according to any of the preceding claims,
**characterized in that**
in addition to the start point (T1) and the end point (T2) of the build-up process of the braking process, the rest state of the braking device (10) is determined, in which the braking device (10) is not actuated, the start point (T1) being preferably defined by the transition from the rest state to the build-up process.

5. Method according to any of the preceding claims,
**characterized in that**
in addition to the start point (T1) and the end point (T2) of the build-up process of the braking process, the braking state of the braking device (10) is determined, in which the braking device (10) is fully actuated, the end point (T2) of the build-up process being preferably defined by the transition of the build-up process into the braking state.

6. Method according to any of the preceding claims,
**characterized in that**
determining (300) the air clearance of the braking device (10) is based on the time difference (ΔT) between the start point (T1) and the end point (T2) of the build-up process, the air clearance preferably being determined (300) by comparing an established time difference (ΔT) with reference values.

7. Method according to any of the preceding claims,
**characterized in that,**
on the basis of the determined air clearance of the braking device (10), an introduction of countermeasures is provided, the countermeasures preferably comprising a repair and/or maintenance process.

8. Method according to any of the preceding claims,
**characterized in that**
a warning message is sent to the driver of the motor vehicle (80) on the basis of the determined air clearance of the braking device (10), the warning message being preferably sent when a threshold value of a parameter for determining the air clearance is exceeded or fallen below.

9. Brake system (2) for arrangement within a motor vehicle (80), configured to perform a method according to any of the preceding claims, comprising:
- a braking device (10), comprising a brake disk (12), a brake caliper (14) and a brake pad (16) which is arranged on the brake caliper (14), at least partially between the brake caliper (14) and the brake disk (12),
- a sensor unit (4) for recording (100) parameters for determining the start point (T1) and the end point (T2) of the build-up process of a braking process, wherein the build-up process of a braking process is the phase of a braking process between a rest state of the braking device (10), in which the braking device (10) is not actuated, and a braking state of the braking device (10), in which the braking device (10) is fully actuated,
- a processing unit (6) for determining (200) the start point (T1) and the end point (T2) of the build-up process of a braking process and for determining (300) the air clearance of the braking device (10) on the basis of the determined start point (T1) and end point (T2) of the build-up process, wherein the brake system (2) is designed, before and/or during the recording (100) of parameters for determining the start point (T1) and the end point (T2) of the build-up process of a braking process, to introduce measures to increase the accuracy of the determination, wherein the measures comprise one of the following steps:
- cleaning the surface of the brake disk (12) and/or of the brake pad (16),
- building up a brake pressure in a targeted, slow manner, especially under distance control,
- reducing a brake pressure in a targeted, slow manner, especially under distance control.

10. Motor vehicle (80), comprising a brake system (2) according to claim 9.

## Revendications

1. Procédé de détermination d'un jeu actuel d'un dispositif de freinage (10) d'un véhicule automobile (80), comprenant les étapes :
- d'acquisition (100) de paramètres pour la détermination d'un point de départ (T1) et d'un point de fin (T2) d'un processus d'établissement d'un processus de freinage par le biais d'une unité de capteur (4), dans lequel le processus d'établissement d'un processus de freinage est la phase d'un processus de freinage entre un état de repos du dispositif de freinage (10), dans lequel le dispositif de freinage (10) n'est pas actionné, et un état de freinage du dispositif de freinage (10), dans lequel le dispositif de freinage (10) est complètement actionné,
- de détermination (200) du point de départ (T1) et du point de fin (T2) du processus d'établissement sur la base des paramètres acquis par le biais d'une unité de traitement (6),
- de détermination (300) du jeu du dispositif de freinage (10) sur la base du point de départ (T1) et du point d'arrivée (T2) déterminés du processus d'établissement par le biais de l'unité de traitement (6), **caractérisé en ce**
**que,** avant et/ou lors de l'acquisition (100) de paramètres pour la détermination du point de départ (T1) et du point de fin (T2) du processus d'établissement d'un processus de freinage, des mesures sont introduites pour augmenter la précision de la détermination, dans lequel les mesures comprennent l'une des étapes suivantes :
- nettoyage de la surface d'un disque de frein (12) et/ou d'une garniture de frein (16),
- établissement lent et ciblé d'une pression de freinage, en particulier sous contrôle de distance,
- suppression lente et ciblée d'une pression de freinage, en particulier sous contrôle de distance.

2. Procédé selon la revendication 1,
**caractérisé en ce**
**que** l'acquisition (100) de paramètres pour la détermination du point de départ (T1) et du point de fin (T2) du processus d'établissement d'un processus de freinage s'effectue par le biais de capteurs acoustiques, de préférence par le biais de capteurs d'humidité ou de capteurs à ultrasons, dans lequel les capteurs d'humidité sont conçus en particulier sous forme de capteurs piézoélectriques et/ou les capteurs à ultrasons sont utilisés dans une double fonction comme capteurs de distance de stationnement du véhicule automobile (80).

3. Procédé selon la revendication 1 ou 2,
**caractérisé en ce**
**que** la détermination (200) du point de départ (T1) du processus d'établissement du processus de freinage s'effectue par la détection d'un point de départ d'un contact entre une garniture de frein (16) et un disque de frein (12) et la détermination (200) du point de fin (T2) du processus d'établissement du processus de freinage s'effectue par la détection d'un contact permanent entre la garniture de frein (16) et le disque de frein (12), dans lequel un contact permanent est établi par le dépassement d'une durée de contact permanent de préférence de 0,3 seconde.

4. Procédé selon l'une des revendications précédentes,
**caractérisé en ce**
**que,** outre le point de départ (T1) et le point de fin (T2) du processus d'établissement du processus de freinage, l'état de repos du dispositif de freinage (10) est déterminé, dans lequel le dispositif de freinage (10) n'est pas actionné, dans lequel le point de départ (T1) est défini de préférence par le passage de l'état de repos au processus d'établissement.

5. Procédé selon l'une des revendications précédentes,
**caractérisé en ce**
**que,** outre le point de départ (T1) et le point de fin (T2) du processus d'établissement du processus de freinage, l'état de freinage du dispositif de freinage (10) est déterminé, dans lequel le dispositif de freinage (10) est complètement actionné, dans lequel le point de fin (T2) du processus d'établissement est de préférence défini par le passage du processus d'établissement à l'état de freinage.

6. Procédé selon l'une des revendications précédentes,
**caractérisé en ce**
**que** la détermination (300) du jeu du dispositif de freinage (10) est déterminée sur la base de la différence de temps (ΔT) entre le point de départ (T1) et le point de fin (T2) du processus d'établissement, dans lequel la détermination (300) du jeu s'effectue de préférence par l'intermédiaire de la comparaison d'une différence de temps (ΔT) déterminée avec des valeurs de référence.

7. Procédé selon l'une des revendications précédentes,
**caractérisé en ce**
**que,** sur la base du jeu déterminé du dispositif de freinage (10), un lancement de contre-mesures est prévu, dans lequel les contre-mesures comprennent de préférence un processus de réparation et/ou de maintenance.

8. Procédé selon l'une des revendications précédentes,
**caractérisé en ce**
**que,** sur la base du jeu déterminé du dispositif de freinage (10), un message d'avertissement est envoyé au conducteur du véhicule automobile (80), dans lequel le message d'avertissement est de préférence envoyé lorsqu'une valeur seuil d'un paramètre pour la détermination du jeu est dépassée vers le haut ou vers le bas.

9. Système de freinage (2) destiné à être agencé à l'intérieur d'un véhicule automobile (80), destiné à la réalisation d'un procédé selon l'une des revendications précédentes, comprenant :
- un dispositif de freinage (10), comportant un disque de frein (12), un étrier de frein (14) et une garniture de frein (16) agencée sur l'étrier de frein (14), au moins partiellement entre l'étrier de frein (14) et le disque de frein (12),
- une unité de capteur (4) pour l'acquisition (100) de paramètres pour la détermination du point de départ (T1) et du point de fin (T2) du processus d'établissement d'un processus de freinage, dans lequel le processus d'établissement d'un processus de freinage est la phase d'un processus de freinage entre un état de repos du dispositif de freinage (10), dans lequel le dispositif de freinage (10) n'est pas actionné, et un état de freinage du dispositif de freinage (10), dans lequel le dispositif de freinage (10) est complètement actionné,
- une unité de traitement (6) pour la détermination (200) du point de départ (T1) et du point de fin (T2) du processus d'établissement d'un processus de freinage et pour la détermination (300) du jeu du dispositif de freinage (10) sur la base du point de départ (T1) et du point de fin (T2) déterminés du processus d'établissement, dans lequel le système de freinage (2) est conçu pour introduire, avant et/ou lors de l'acquisition (100) de paramètres pour la détermination du point de départ (T1) et du point de fin (T2) du processus d'établissement d'un processus de freinage, des mesures pour augmenter la précision de la détermination, dans lequel les mesures comprennent l'une des étapes suivantes :
- nettoyage de la surface du disque de frein (12) et/ou de la garniture de frein (16),
- établissement lent et ciblé d'une pression de freinage, en particulier sous contrôle de distance,
- suppression lente et ciblée d'une pression de freinage, en particulier sous contrôle de distance.

10. Véhicule automobile (80) comprenant un système de freinage (2) selon la revendication 9.
